# EUROPEAN PATENT SPECIFICATION

(11) **EP 3 255 217 B1**
(45) Date of publication and mention of the grant of the patent: **03.12.2025**
(21) Application number: 17154552.8
(22) Date of filing: 03.02.2017
(51) Int. Cl.: E04B 1/26, E04B 1/19, E04B 7/02, E04C 3/02

(54) **CONNECTOR ASSEMBLY AND METHOD**
VERBINDERANORDNUNG UND -VERFAHREN
ENSEMBLE CONNECTEUR ET PROCÉDÉ

(30) Priority: 17.02.2016 GB 201602780
(43) Date of publication of application: 13.12.2017
(73) Proprietor: Simpson Strong-Tie Company, Inc., Pleasanton, CA 94588 (US)
(72) Inventor: FREDERIKSEN, Henrik, Tamworth, Staffordshire B78 3HG (GB)
(74) Representative: Fuchs Patentanwälte Partnerschaft mbB

(56) References cited:
- JP-A- 2001 323 568
- JP-A- H08 277 588
- US-A- 5 715 642
- US-A1- 2008 289 267

## Description

The present invention relates to a wind bracing connector assembly, and in particular to an adjustable connector assembly for use in transmitting tensile loads and having limited capability for adjustment. Most preferably, the connector assembly is for use in connecting a wind bracing strap to a structural member.

Straps are commonly used in the construction industry for stiffening frame structures, especially roof frame structures. Wind bracing straps are used in roof construction to brace the roof trusses and rafters against wind loading. Once installed, the straps and the connectors used to connect them to the structural members of the roof are subject to high tensile loads.

In order to function properly, wind bracing straps must be arranged at a particular angle to the roof structural member to which they are attached. Typically, this angle is between 30 and 60 degrees, however in order to adapt to different applications and to allow for tolerances in manufacture and installation, the angle must be adjustable.

For traditional wind bracing straps, a connector assembly which comprises a pivoting connection is typically used. Such pivoting connections do not limit the angle at which the wind bracing strap may be arranged relative to the roof structural member. This allows the user installing the connector assembly to adjust the angle to exactly fit the installation, however it also allows the user install the strap at an incorrect angle, for example at an angle outside the range for which a particular connector has been certified as safe. Such improper installation may lead to failure of the wind bracing strap, and/or compromise the bracing achievable before any failure.

In addition, in a connection formed from a simple pivot, it is often necessary to provide two layers of material in one connector such that they may be arranged one either side of the other connector to achieve the necessary connection strength through the pivot. An additional connector is therefore used between the wind bracing strap and the connector to which it is attached.

US1787167 describes a connecting member for connecting rafters and seeks to provide a universally adjustable means for permitting lateral adjustment of a rafter and a frame member in relation to each other.

The invention is defined by the appended claims.

The connector assembly of the present invention provides for connection of a wind bracing strap directly to a connector, the wind bracing strap itself forming one of the connectors in the connector assembly.

The connector assembly of the present invention reduces the risk of improper installation by limiting the relative positions in which the two connectors may be attached to each other while remaining adjustable by up to 45 degrees of rotation of one connector relative to the other, once the connection is formed.

According to a first aspect, there is provided a connector assembly comprising a first connector and a second connector; wherein the first connector comprises a first pivot aperture defining a centre of a first circumference one or more arcuate apertures, each of the one or more arcuate apertures being arranged at a selected position on the first circumference, and the second connector comprises a second pivot aperture defining a centre of a second circumference; and one or more fastener apertures arranged on the second circumference; wherein the first circumference and the second circumference are each arranged at the same radial distance (r) from their respective pivot apertures; and wherein the one or more arcuate apertures and the one or more fastener apertures are configured such that when a pivot member is received in the first and second pivot apertures in use, the first connector and the second connector may be arranged in use in a limited range of relative positions in which at least one of the one or more fastener apertures is aligned with one of the one or more arcuate apertures such that a fastener may be received simultaneously in the aligned arcuate aperture and fastener aperture and the first connector and the second connector may rotate relative one another; and the one or more arcuate apertures and the one or more fastener apertures are configured such that relative rotation between the first connector and the second connector is constrained to a limited angular range around the pivot.

According to a second aspect, there is provided a connector assembly for the connection of a first structural member to a second structural member, the connector assembly comprising a first connector and a second connector; wherein the first connector comprises a pivot aperture defining a centre of a first circumference, and one or more arcuate apertures, each of the one or more arcuate apertures being arranged at a selected position around the first circumference; wherein the second connector comprises; a pivot defining a centre of a second circumference; and one or more fastener apertures arranged around the second circumference; wherein the first circumference is of equal size to the second circumference; and wherein each of the one or more fastener apertures is arranged such that, in use, when a pivot member is received in the pivot aperture such that the first connector may rotate relative to the second connector, a fastener may be inserted through the or each fastener aperture and received in one of the one or more arcuate apertures; and wherein the one or more arcuate apertures and the one or more fastener apertures are configured such that relative rotation between the first connector and the second connector is constrained between limit points defined by the ends of the respective arcuate apertures and fastener apertures.

In either aspect, the one or more arcuate apertures and the one or more fastener apertures may be configured such that, in use, the first connector may rotate by up to 45 degrees relative to the second connector.

According to a third aspect, there is provided a connector assembly comprising a first connector and a second connector; wherein the first connector comprises a first pivot aperture defining a centre of a first circumference and one or more arcuate apertures, each of the one or more arcuate apertures being arranged around the first circumference; and the second connector comprises a second pivot aperture defining a centre of a second circumference and one or more fastener apertures arranged around the second circumference; wherein the first circumference and the second circumference are each arranged at the same radial distance (r) from their respective pivot apertures; and wherein the one or more arcuate apertures and the one or more fastener apertures are configured such that when a pivot member is received in the first and second pivot apertures in use, at least one of the one or more fastener apertures may be aligned with one of the one or more arcuate apertures such that a fastener may be received simultaneously in the aligned arcuate aperture and fastener aperture and the first connector may rotate relative to the second connector; and wherein the one or more arcuate apertures and the one or more fastener apertures are configured such that, in use, the first connector may rotate by up to 45 degrees relative to the second connector.

Preferably, the one or more arcuate apertures and the one or more fastener apertures may be arranged such that the first connector and second connector can be aligned in a limited number of relative positions in use.

In any aspect, the one or more arcuate apertures and the one or more fastener apertures may be configured such that, in use, the first connector may rotate by 15 to 45 degrees relative to the second connector or, more preferably, the first connector may rotate by approximately 30 degrees relative to the second connector.

In any aspect, the or each arcuate aperture may have an arc angle of up to 45 degrees, or of between 15 and 45 degrees, or more preferably of substantially 30 degrees.

In any aspect, the arc angles of the one or more arcuate apertures and the positions of the one or more fastener apertures on the second circumference may be configured to limit the relative rotation between the first and second connectors in use.

In any aspect, the first connector and/or the second connector may be configured to transmit tensile loads.

In any aspect, the connector assembly may be configured to transmit tensile loads from a first structural member to a second structural member along a force transmission path passing through the pivot in use. Preferably, the or each fastener aperture may be offset from the force transmission path. Preferably, one of the structural members may be a tensioning member, e.g. a wind bracing strap. The first connector may be integrally formed with the first structural member and/or the second connector may be integrally formed with the second structural member.

In any aspect, the connector assembly may comprise a plurality of arcuate apertures and a plurality of fastener apertures. Preferably, the plurality of arcuate apertures may be unevenly distributed around the first circumference and/or the plurality of fastener apertures may be unevenly distributed around the second circumference.

In any aspect, the first connector may comprise one or more fastening elements for fastening the first connector to the first structural member and/or the second connector may comprise one or more fastening elements for fastening the second connector to the second structural member. Preferably, the fastening elements comprise apertures for receiving fasteners.

The second structural member may be a strap comprising a repeating pattern of pivot and fastener apertures provided along at least a part of its length, or at either or both ends. Preferably, the second connector may be a portion of the strap comprising the repeating pattern of fastener apertures, the fastener apertures and pivot aperture forming part of the repeating pattern. Preferably, the one or more arcuate apertures may be configured to permit alignment with the corresponding repeating pattern of fastener apertures, when arranged in one or more relative positions.

In any aspect, the fastener or fasteners may be bolts, nails, screws, rivets, pins or other mechanical fasteners. Alternatively, or in addition, the fastener or fasteners may comprise portions of the second connecting portion bent out of a surface of the second connecting portion.

In any aspect, the pivot member may be a bolt, rivet, fastener, dowel or any other component around which the first and/or second connecting portions may rotate. Preferably, the pivot member is rotatably attached to the first connector and/or the second connector. Alternatively, or in addition, the pivot member may be integrally formed with one of the first or the second connector. Alternatively, or in addition, the pivot member may be fixed relative to one of the first and second connectors

In any aspect, the first connector and/or the second connector may be formed from sheet metal.

Preferably, the connector may comprise a first pivot aperture defining a centre of a first circumference; and one or more arcuate apertures, each of the one or more arcuate apertures being arranged at a selected position on the first circumference. Preferably, the or each arcuate aperture may comprise an arc angle of up to 45 degrees, or more preferably of between 15 and 45 degrees, or most preferably of substantially 30 degrees. Preferably, the one or more arcuate apertures may be configured to correspond to a repeating pattern of pivot and fastener apertures on a wind bracing strap.

There is further provided a method of forming a connection using the connector assembly as described above comprising the steps of:
inserting the pivot member through the first pivot aperture of the first connector and the second pivot aperture of the second connector such that the first connector is rotatably connected to the second connector;
inserting one or more fasteners into and through the one or more fastener apertures such that each fastener also passes through an arcuate aperture; and
rotating the first connector relative to the second connector until the desired orientation of the first connector relative to the second connector is achieved.

Preferably, the method of forming a connection further comprises fastening the fasteners such that the orientation of the first connector is fixed relative to the second connector.

Preferred embodiments of the present invention will now be described, by way of example only, with reference to the accompanying drawings, in which:
Figure 1 is a schematic partial detail view of a first connector for use in a connector assembly according to a preferred embodiment of the present invention;
Figure 2 is a schematic partial detail view of a second connector for use in a connector assembly according to a preferred embodiment of the present invention;
Figure 3 is a schematic plan view of a connector assembly according to a preferred embodiment of the present invention in use in an intermediate position;
Figure 4a is a schematic plan view of the connector assembly of Figure 3 in use with the second connector in a first limit position;
Figure 4b is a schematic plan view of a connector assembly of Figure 3 in use with the second connector in a second limit position;
Figure 4c is a schematic illustrative view of a connector assembly of Figure 3 showing the second connector in both the first and second limit positions, illustrating the possible range of motion of the second connector;
Figure 5 is a schematic plan view of a first connector for use in a connector assembly according to a further preferred embodiment of the present invention;
Figure 6a is schematic plan view of a connector assembly comprising the connector of Figure 5 in use in a first limit position;
Figure 6b is schematic plan view of the connector assembly of Figure 6a in use in a second limit position;
Figure 7 is a schematic perspective view of a connector assembly according to a yet further embodiment of the present invention in use;
Figure 8 is a further schematic perspective view of the connector assembly of Figure 7 in use; and
Figure 9 is a schematic perspective view of a connector assembly according to a yet further embodiment of the present invention in use.

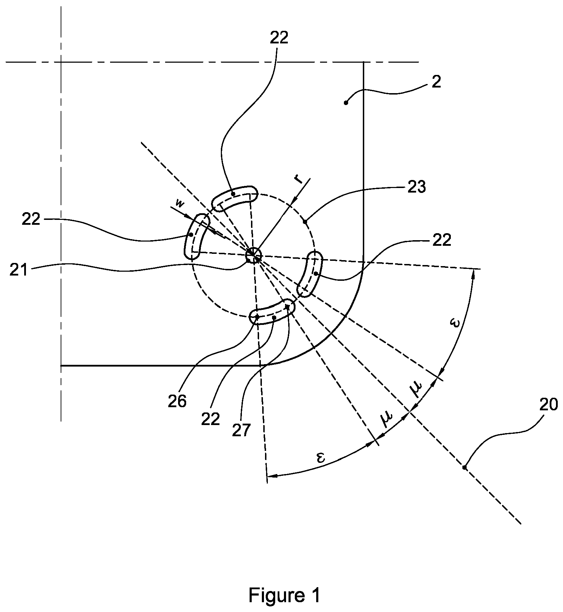

Referring first to Figures 1 to 3, there is illustrated a connector assembly 1 comprising a first connector 2 and a second connector 3. The first connector 2 comprises a first pivot aperture 21 at the centre of a first circumference 23. The first circumference 23 is arranged at radius r from the centre of the first pivot aperture 21. A plurality of arcuate apertures 22 are arranged at selected positions on the first circumference 23, the whole of the first circumference 23 being available for positioning the arcuate apertures. Each arcuate aperture has a width w and an arcuate centre line arranged on the first circumference 23. Each arcuate aperture 22 further comprises a first end centre 26 and a second end centre 27, the first and second end centres 26, 27 being located on the centre line of the arcuate aperture at a distance of w/2 from an end of the arcuate aperture (therefore corresponding to the position of the centre of a shank of a fastener having a diameter of substantially w received in the arcuate aperture and abutting against the end in question in use). Each of the arcuate apertures 22 has the same arc angle ε (the angle at the pivot equal to the measure of the central angle that intercepts the arc between the first and second end centres 26, 27) of substantially 30 degrees.

A first axis 20 may be defined passing across the centre of the first pivot aperture 21. The arc angle around the first pivot aperture 21 between the first axis 20 and the proximal end centre of each arcuate aperture 22 (labelled angle µ) is substantially 12 degrees.

The arcuate apertures 22 of the first connector 2 are configured to receive fasteners (not shown) for fastening the first connector 2 to a second connector 3. The first connector 2 comprises a plurality of further apertures (not shown in Figure 1) configured to receive fasteners for fastening the first connector 2 to a first structural member 6.

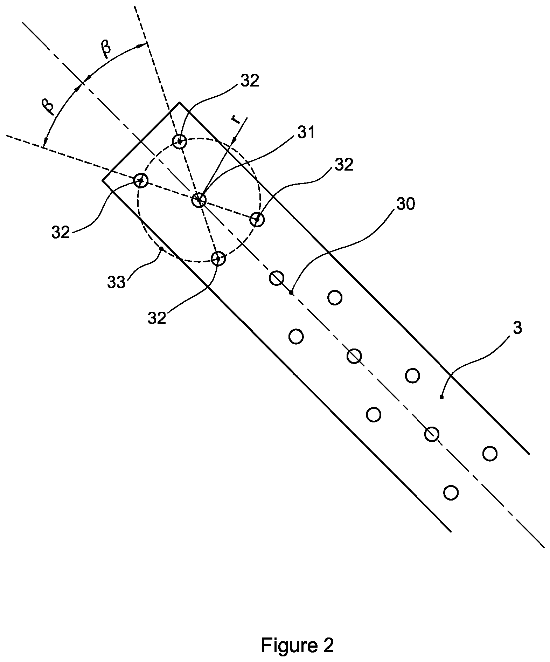

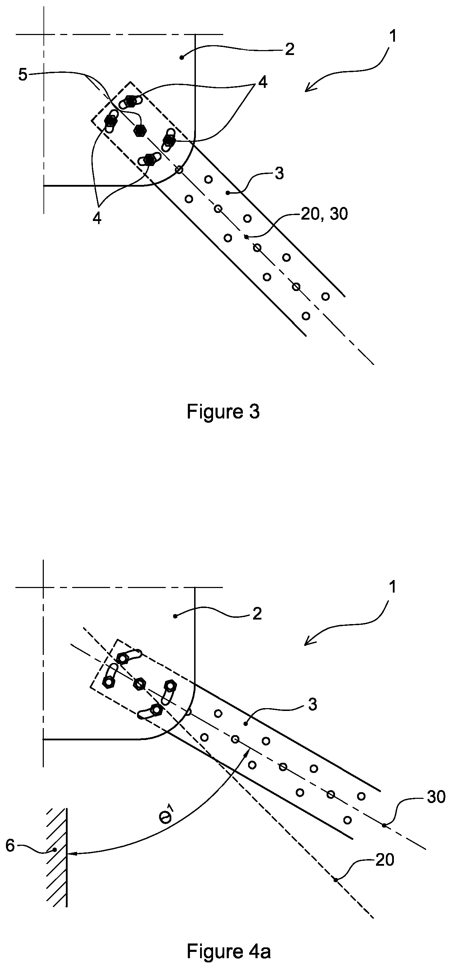

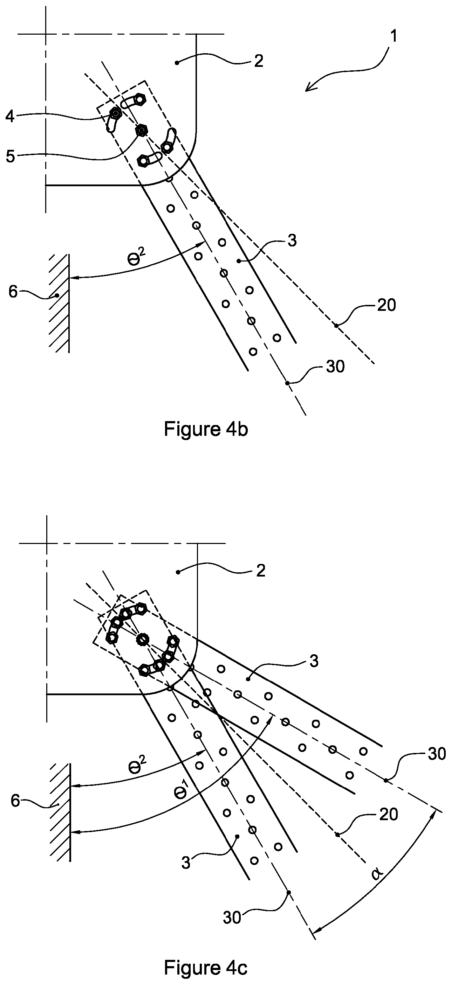

Referring to Figure 2, the second connector 3 comprises a second pivot aperture 31 at the centre of a second circumference 33. The second circumference 33 is at the same radial distance r from the centre of the second pivot aperture 31 as the first circumference 23 is from the centre of the first pivot aperture 21. A plurality of fastener apertures 32 are arranged at selected positions on the second circumference 33. Each of the fastener apertures 32 is configured to receive the shank of a fastener 4 (as shown in Figure 4) in use such that the fastener 4 is held in a fixed position relative to the second circumference 33. A second axis 30 may be defined passing across the centre of the second pivot aperture 31.

The second connector 3 is an end portion of a wind bracing strap, the second pivot aperture 31 and the fastener apertures 32 being part of a repeating pattern of pivot and fastening apertures extending along the length of the strap. An angle β may be defined as the shortest arc angle around the second pivot aperture 31 between the second axis 30 and the centre of each fastener aperture 32. In the illustrated embodiment, β is substantially 27 degrees.

The positions of the arcuate apertures 22 on the first circumference 23 of the first connector 2 and the fastener apertures 32 on the second circumference of the second connector 3 are configured such that when the first connector 2 is superposed over the second connector 3, the midpoint of the each of the arcuate apertures 22 of the first connector 2 may be located over or under at least one of the fastener apertures 32 of the second connector 3. Therefore, when a pivot member 5 is received in both the first and second pivot apertures simultaneously in use, each fastener aperture 32 may receive a fastener 4 which is also received in the aligned arcuate aperture 22 as shown in Figure 3.

The arcuate apertures 22 are unevenly spaced around the first circumference 3 such that the first connector 2 and the second connector 3 may be arranged in use in only a limited range of relative positions in which at least one of the fastener apertures 32 is aligned with one of the arcuate apertures 22 to allow a fastener 4 to be received in the aligned arcuate aperture 22 and fastener aperture 32 simultaneously such that the first connector 2 may rotate around the pivot member 5 relative to the second connector 3.

The arcuate apertures 22 and the fastener apertures 32 are configured such that relative rotation between the first connector 2 and the second connector 3 is constrained to a limited angular range around the pivot member 5. As shown in Figure 4c, an angle α may be defined as the maximum possible angular movement of the first connector 2 relative to the second connector 3 around the pivot member 5 when at least one fastener 4 is received in a fastener aperture 32 and an aligned arcuate aperture 22. Angle α is equal to the arc angle ε of each the arcuate apertures 22.

As shown in Figure 4a, a first limit position may be defined in which the fasteners 4 are each received in a fastener aperture 32 and an aligned arcuate aperture 22 and the first connector 2 is rotated relative to the second connector 3 such that each fastener 4 abuts a first end of the arcuate aperture 22 in which it is received. In this position, the angle between the second axis 30 and a first structural member 6 to which the first connector 2 is attached may be defined as θ¹.

As shown in Figure 4b, a second limit position may be defined in which the fasteners 4 are each received in a fastener aperture 32 and an aligned arcuate aperture 22 and the first connector 1 is rotated relative to the second connector 3 such that each fastener 4 abuts a second end of the arcuate aperture 22 in which it is received. In this position, the angle between the second axis 30 and the first structural member 6 to which the first connector 2 is attached may be defined as θ².

The angle α is therefore equal to the difference between θ¹ and θ². For illustrative purposes, both the first and second limit positions are shown in Figure 4c. In the illustrated embodiment, θ¹ is substantially 60 degrees and θ² is substantially 30 degrees, and therefore the maximum possible angular movement (α) of the first connector 2 relative to the second connector 3 is substantially 30 degrees. Once the position of the first connector 2 relative is fixed relative to the second connector 3 in use, the actual angle θ between the second axis 30 and the first structural member 6 to which the first connector 2 is attached must necessarily be between θ¹ and θ².

The second connector 3 is a wind brace strap configured to transmit tensile forces to the first connector 2 along a force transmission path which is aligned with the second axis 30 and passes through the pivot member 5. As shown in Figure 2, the fastener apertures 32 are offset from the second axis 30, such that the tensile forces acting along the length of the strap are not all directed through the pivot member 5. The connector assembly 1 may therefore resist higher loads because the load is more effectively distributed.

Similarly, the fastener apertures 32 are arranged symmetrically relative to the second axis 30, thereby providing a more balanced distribution of the load across the width of the strap.

In use, a connection is formed using the connector assembly 1 by inserting a pivot member 5 into the first pivot aperture 21 and the second pivot aperture 22 such that the first connector 2 is rotatably connected to the second connector 3. One or more fasteners 4 are inserted into the fastener apertures 32 such that each fastener passes through an arcuate aperture 23. The first connector 2 may then be rotated relative to the second connector 3 (or vice versa) within the limits until the desired orientation of the first connector 2 relative to the second connector 3 is achieved. The fasteners 4 may then be fastened such that the orientation of the first connector 2 is fixed relative to the second connector 3.

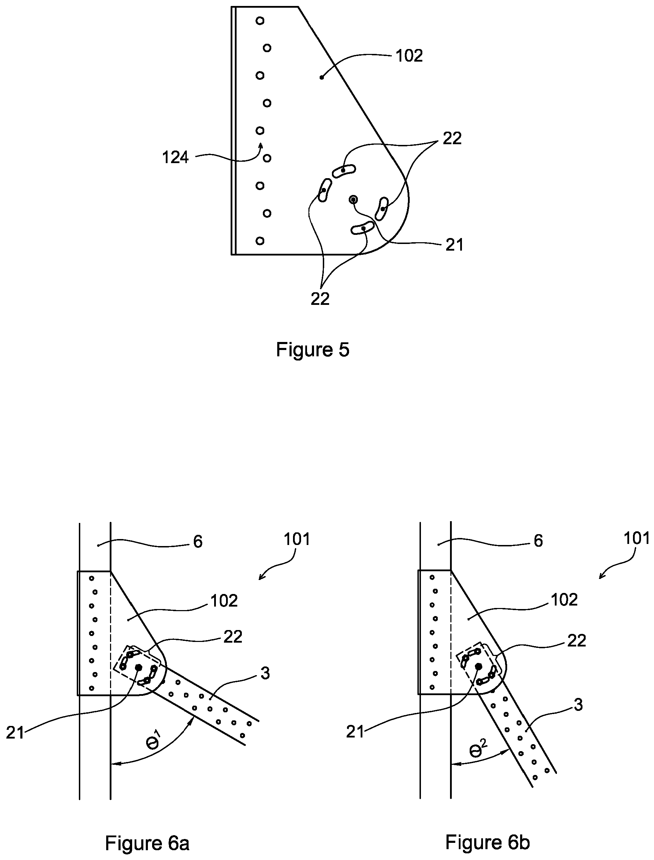

Further preferred embodiments of a connector assembly according to the present invention will now be described with reference to Figures 5 to 9. In the following description only the differences between the connector assembly of the further embodiments and the connector assembly 1 as described above will be described in detail. In all other respects, the connector assembly may be as described above. Like reference numerals have been used for like features.

A further embodiment of a connector assembly 101 according to the present invention comprises a first connector 102 as shown in Figures 5 to 6b. The first connector 102 comprises arcuate apertures 22 and a first pivot aperture 21 as previously described. The first connector 102 has a different outer profile than that of the first connector 2 as shown in Figure 1. The first connector 102 further comprises an attachment portion 124 for attachment of the first connector 102 to a first structural member 6. The attachment portion 124 comprises a flange and a plurality of apertures for receiving fasteners. The first connector 102 is connected to a second connector 3 as previously described and has a first limit position (shown in Figure 6a) with θ¹ at substantially 60 degrees and a second limit position (shown in Figure 6b) with θ² at substantially 30 degrees.

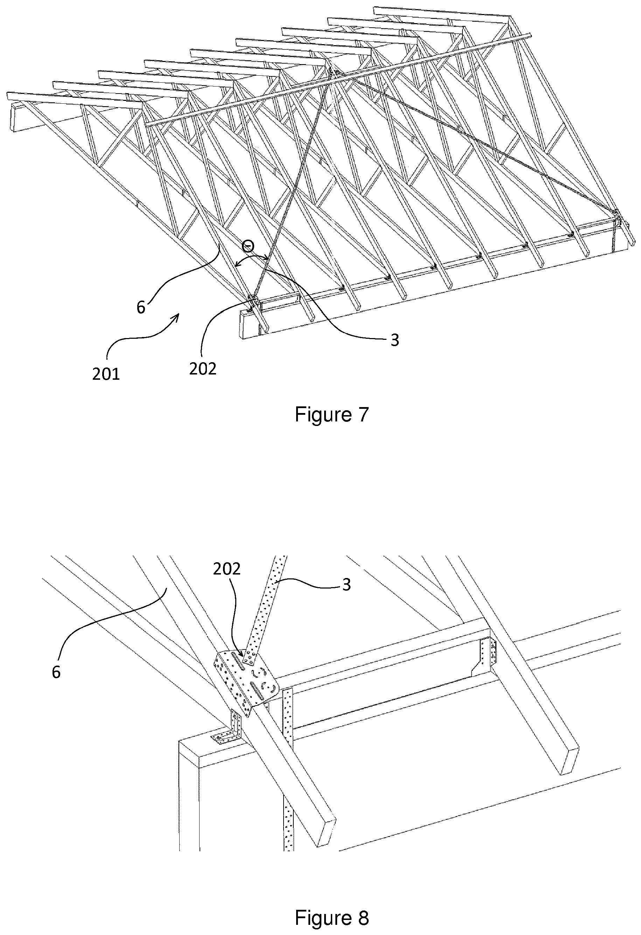

A yet further embodiment of a connector assembly 201 according to the present invention is shown in Figures 7 and 8. As shown in Figure 8, the first connector 202 comprises two or more (three in the example of Figure 8) sets of pivot and arcuate apertures to form a connector element to which a plurality of second connectors 3 may be attached.

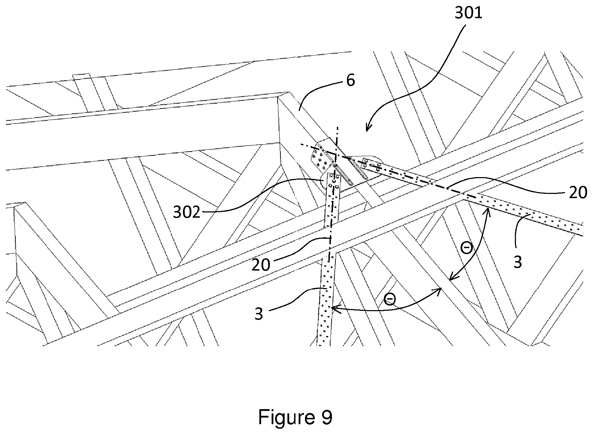

A yet further embodiment of a connector assembly 301 according to the present invention is shown in Figure 9. As in the further embodiment of Figures 7 and 8, the first connector 302 comprises two or more (two in the example of Figure 9) sets of pivot and arcuate apertures to form a connector element to which a plurality of second connectors 3 may be attached. The first connector 302 has two first axes 20 (i.e. one passing through each pivot) oriented in different directions relative to the first structural member 6.

Whilst preferred embodiments of the present invention have been described above and illustrated in the drawings, these are by way of example only and non-limiting. It will be appreciated by those skilled in the art that many alternatives are possible within the ambit of the invention. The skilled person will understand that individual features of each aspect/embodiment may be combined with any other aspect/embodiment or aspects/embodiments unless clearly indicated to the contrary.

The skilled person will understand that features described as being part of the first connector may alternatively be provided on the second connector, and vice versa. For example, the arcuate apertures may be on the second connector and the fastener apertures may be on the first connector.

The skilled person will understand that the order of the steps in any method described or claimed is not limiting, and said steps may be carried out in any practical order.

The connector assembly according to any embodiment may be configured to connect a first structural member and a second structural member. The structural member(s) may each be of any type, for example i-joist, beam, header, column, rafter, straps and other structural connectors.

The skilled person will understand that the fastener(s) 4 may be of any suitable type, for example pins, dowels, bolts, screws etc. which allows for fastening of the fasteners such that the orientation of the first connector 2 is fixed relative to the second connector 3. For example, the fastener(s) 4 may be bolts and fastening may be achieved using nuts. The fastener(s) 4 may comprise portions bent out of the second connector 3. Such fasteners may, for example, be bent or crimped to fix the first and second connectors in their relative positions.

In the illustrated embodiments, angle α is substantially 30 degrees. In alternative embodiments, angle α may be any angle up to substantially 45 degrees. Preferably, α may be between substantially 15 and substantially 45 degrees. The first connector 2 and/or second connector 3 may be configured such that the limit positions have angles θ¹ and θ² which are any selected angles required for a particular application, provided that they are configured to achieve the required angle α of up to substantially 45 degrees, or more preferably substantially 15 to substantially 45 degrees, or most preferably substantially 30 degrees.

In the illustrated embodiments, the arcuate apertures 22 are unevenly spaced around the first circumference 3 such that the first connector 2 and the second connector 3 may be arranged in use in only a limited range of relative positions. In particular, the skilled person will understand that the arc angles and the angular positions of the arcuate apertures and fastener apertures relative to the first axis 20 and the second axis 30 as shown in the illustrated embodiments are non-limiting. Other configurations of arcuate apertures 22 and fastener apertures 32 may be adopted, provided that the first connector 2 and the second connector 3 are configured such that they may be arranged in use in only a limited range of relative positions, thereby limiting the possibility for user error in aligning the first connector 2 and second connector 3 when forming the connection.

In the illustrated embodiments, the fastener apertures 32 are shown in two pairs, each pair being arranged on an axis parallel to the second axis 30. The skilled person will understand that other arrangements of fastener apertures 32 may be used. In preferred embodiments, the fastener apertures may all be offset relative to the second axis 30 such that force transmission paths through the fasteners 4 do not all pass through the pivot member 5, thereby increasing the load resistance of the connector assembly, in particular for tensile loads. However, in other embodiments one or more of the fastener apertures 32 may lie on the second axis 30.

In the illustrated embodiments, a fastener 4 is arranged in each of the fastener aperture/arcuate aperture pairs. The skilled person will understand that it is not necessary to provide a fastener in each possible fastener aperture/arcuate aperture pair, as long as the fastener aperture(s) and arcuate aperture(s) in which fasteners are received in use are configured such that the possible rotation of the first connector 2 relative to the second connector 3 around the pivot member 5 is limited. Similarly, the connector assembly may comprise any number of arcuate apertures and aligned fastener apertures, including a single arcuate aperture and aligned fastener aperture, as long as the fastener aperture(s) and arcuate aperture(s) in which fasteners are received in use are configured such that the possible rotation of the first connector 2 relative to the second connector 3 around the pivot member 5 is limited. Preferably, the first connector 2 comprises four arcuate apertures.

In the illustrated embodiments, the arc angle ε of each the arcuate apertures is equal to angle α (the range of possible rotation of one connector relative to the other connector). In alternative embodiments, one or more of the arcuate apertures may have an arc angle ε greater than angle α. For example, one or more arcuate apertures may be configured to receive two fasteners in use, so that in the first limit position a first fastener contacts a first end of the arcuate aperture and a second fastener is in a middle portion of the aperture, and in the second limit position the second fastener is in contact with a second end of the arcuate aperture and the first fastener is in the middle portion of the arcuate aperture. Alternatively, the fastener aperture(s) and arcuate aperture(s) may be arranged and configured such that in the first limit position a at least a first fastener contacts an end of a first arcuate aperture and at least a second fastener is in a not-limit position in a second arcuate aperture, and in the second limit position the second fastener is in contact with an end of the second arcuate aperture and at least the first fastener is in a non-limit position in the first arcuate aperture.

In the illustrated embodiments, the second connector is integrally formed with a second structural member (i.e. the second connector 3 is an end portion of a wind bracing strap, the second pivot aperture 31 and the fastener apertures 32 being part of a repeating pattern of apertures extending along the length of the strap). The skilled person will understand that the second connector may alternatively be a separate component for attachment to a wind brace strap or other second structural member. In further alternative embodiments, the first connector may be integrally formed with the first structural member and/or the second connector may be integrally formed with an alternative second structural member.

In the illustrated embodiments the second connector 3 is the end portion of a wind brace strap configured to transmit tensile forces along a force transmission path aligned with a longitudinal axis of the strap. In other embodiments, the second connector 3 may take a form other than the end portion of a wind brace strap. In any embodiment, the second connector 3 is configured such that, in use, forces acting on the second connector 3, in particular tensile forces, are transmitted from the second connector 3 to the first connector 2 via the pivot member 5 and the fasteners. The second connector 3 may be configured to transmit forces along a force transmission path passing through the pivot member 5, aligned with the second axis 30. The fastener apertures 32 are offset from the second axis 30, such that the forces are not all directed through the pivot member 5. The connector assembly may therefore resist higher loads because the load is more effectively distributed across the width of the second connector 3.

In any embodiment, the first and/or second connectors may comprise one or more fastening elements, for example fastener apertures, for fastening the connector to a structural member.

The first or second connector 2, 3 may comprise the pivot member 5. That is to say, the pivot member 5 may be permanently or releasably attached to the first or second connector 2,3 during or before the connection of the connector assembly 1. In any embodiment, the pivot member 5 may take the form of a pin, a dowel, a bolt, a rivet, the shank of a fastener, or any other suitable pivot element. The pivot member 5 may comprise a portion bent out of the surface of the first or second connector 2, 3. If the pivot member 5 takes the form of a fastener, it may be fastened after adjustment of the position of the second connector 5 to further secure the relative positions of the first connector 2 and the second connector 3.

Each feature disclosed in this specification (including the accompanying claims and drawings), may be replaced by alternative features serving the same, equivalent or similar purpose, unless expressly stated otherwise. Thus, unless expressly stated otherwise, each feature disclosed is one example only of a generic series of equivalent or similar features. In addition, all of the features disclosed in this specification (including the accompanying claims and drawings), and/or all of the steps of any method or process so disclosed, may be combined in any combination, except combinations where at least some of such features and/or steps are mutually exclusive.

For the avoidance of doubt, any one or more of the features of any embodiment may be combined and/or used separately in a different embodiment with any other feature or features from any of the embodiments, within the scope of the appended claims. As such, the true scope of the invention is that set out in the appended claims.

## Claims

1. A wind bracing connector assembly (1) configured to transmit tensile loads, comprising:
a first connector (2); and
a second connector (3); wherein:
the first connector comprises:
a first pivot aperture (21) defining a centre of a first circumference (23); and
one or more arcuate apertures (22),
each of the one or more arcuate apertures being arranged at a selected position on the first circumference; and
the second connector comprises:
a second pivot aperture (31) defining a centre of a second circumference (33); and
one or more fastener apertures (32) arranged on the second circumference,
wherein the second pivot aperture and the one or more fastener apertures arranged on the second circumference comprise a repeating pattern of pivot and fastener apertures provided along at least a part of a length of the second connector, which may be a strap, wherein:
the first circumference and the second circumference are each arranged at the same radial distance (r) from their respective pivot apertures; and wherein:
the one or more arcuate apertures and the one or more fastener apertures are configured such that when a pivot member (5) is received in the first and second pivot apertures in use, the first connector and the second connector may be arranged in use in a limited range of relative positions to one another in which at least one of the one or more fastener apertures is aligned with one of the one or more arcuate apertures such that a fastener may be received simultaneously in the aligned arcuate aperture and fastener aperture, and the first connector and the second connector may rotate relative to one another; and
the one or more arcuate apertures and the one or more fastener apertures are configured such that relative rotation between the first connector and the second connector is constrained to a limited angular range around the pivot.

2. A connector as claimed in any preceding claim wherein the one or more arcuate apertures and the one or more fastener apertures are configured such that, in use, the first connector may rotate by up to 45 degrees relative to the second connector.

3. A connector assembly as claimed in any one of the preceding claims wherein the one or more arcuate apertures and the one or more fastener apertures are arranged such that the first connector and second connector can be aligned in a limited number of relative positions in use.

4. A connector assembly as claimed in any preceding claim wherein the one or more arcuate apertures and the one or more fastener apertures are configured such that, in use, the first connector may rotate by 15 to 45 degrees relative to the second connector, or more preferably such that the first connector may rotate by approximately 30 degrees relative to the second connector.

5. A connector assembly as claimed in any preceding claim wherein the or each arcuate aperture has an arc angle of up to 45 degrees, or wherein the or each arcuate aperture has an arc angle of between 15 and 45 degrees, or more preferably wherein the or each arcuate aperture has an arc angle of substantially 30 degrees.

6. A connector assembly as claimed in any preceding claim wherein the arc angles of the one or more arcuate apertures and the positions of the one or more fastener apertures on the second circumference are configured to limit the relative rotation between the first and second connectors in use.

7. A connector assembly as claimed in any preceding claim wherein the first connector and/or the second connector is configured to transmit tensile loads.

8. A connector assembly as claimed in any preceding claim wherein the connector assembly is configured to transmit tensile loads from a first structural member to a second structural member along a force transmission path passing through the pivot in use.

9. A connector assembly as claimed in claim 8 wherein the or each fastener aperture is offset from the force transmission path.

10. A connector assembly as claimed in claim 8 or claim 9 wherein one of the structural members is a tensioning member, e.g. a wind bracing strap.

11. A connector assembly as claimed in any one of claims 8 to 10 wherein the first connector is integrally formed with the first structural member and/or the second connector is integrally formed with the second structural member.

12. A connector assembly as claimed in any preceding claim comprising a plurality of arcuate apertures and a plurality of fastener apertures.

13. A connector assembly as claimed in claim 12 wherein the plurality of arcuate apertures are unevenly distributed around the first circumference.

## Patentansprüche

1. Windverband-Verbinderanordnung (1), die dazu konfiguriert ist, Zugkräfte zu übertragen, umfassend:
einen ersten Verbinder (2); und
einen zweiten Verbinder (3); wobei:
der erste Verbinder Folgendes umfasst:
eine erste Schwenköffnung (21), die einen Mittelpunkt eines ersten Umfangs (23) definiert; und
eine oder mehrere bogenförmige Öffnungen (22), wobei jede der einen oder der mehreren bogenförmigen Öffnungen an einer ausgewählten Position an dem ersten Umfang angeordnet ist; und
der zweite Verbinder Folgendes umfasst:
eine zweite Schwenköffnung (31), die einen Mittelpunkt eines zweiten Umfangs (33) definiert; und
eine oder mehrere Befestigungsöffnungen (32), die an dem zweiten Umfang angeordnet sind,
wobei die zweite Schwenköffnung und die eine oder die mehreren Befestigungsöffnungen, die an dem zweiten Umfang angeordnet sind, ein sich wiederholendes Muster von Schwenk- und Befestigungsöffnungen umfassen, das entlang mindestens eines Teils einer Länge des zweiten Verbinders bereitgestellt ist, der ein Gurt sein kann, wobei:
der erste Umfang und der zweite Umfang jeweils in dem gleichen radialen Abstand (r) von ihren jeweiligen Schwenköffnungen angeordnet sind; und wobei:
die eine oder die mehreren bogenförmigen Öffnungen und die eine oder die mehreren Befestigungsöffnungen derart konfiguriert sind, dass, wenn ein Schwenkelement (5) im Gebrauch in der ersten und der zweiten Schwenköffnung aufgenommen ist, der erste Verbinder und der zweite Verbinder im Gebrauch in einem begrenzten Bereich von relativen Positionen zueinander angeordnet sein können, an denen mindestens eine der einen oder der mehreren Befestigungsöffnungen an einer der einen oder der mehreren bogenförmigen Öffnungen ausgerichtet ist, sodass ein Befestigungselement gleichzeitig in der bogenförmigen Öffnung und der Befestigungsöffnung, die ausgerichtet sind, aufgenommen werden kann und sich der erste Verbinder und der zweite Verbinder relativ zueinander drehen können; und
die eine oder die mehreren bogenförmigen Öffnungen und die eine oder die mehreren Befestigungsöffnungen derart konfiguriert sind, dass eine relative Drehung zwischen dem ersten Verbinder und dem zweiten Verbinder auf einen begrenzten Winkelbereich um den Zapfen beschränkt ist.

2. Verbinder nach einem der vorhergehenden Ansprüche, wobei die eine oder die mehreren bogenförmigen Öffnungen und die eine oder die mehreren Befestigungsöffnungen derart konfiguriert sind, dass sich der erste Verbinder im Gebrauch um bis zu 45 Grad relativ zu dem zweiten Verbinder drehen kann.

3. Verbinderanordnung nach einem der vorhergehenden Ansprüche, wobei die eine oder die mehreren bogenförmigen Öffnungen und die eine oder die mehreren Befestigungsöffnungen derart angeordnet sind, dass der erste Verbinder und der zweite Verbinder im Gebrauch in einer begrenzten Anzahl an relativen Position ausgerichtet sein können.

4. Verbinderanordnung nach einem der vorhergehenden Ansprüche, wobei die eine oder die mehreren bogenförmigen Öffnungen und die eine oder die mehreren Befestigungsöffnungen derart konfiguriert sind, dass sich der erste Verbinder im Gebrauch um 15 bis 45 Grad relativ zu dem zweiten Verbinder drehen kann, oder weiter bevorzugt, sodass sich der erste Verbinder um ungefähr 30 Grad relativ zu dem zweiten Verbinder drehen kann.

5. Verbinderanordnung nach einem der vorhergehenden Ansprüche, wobei die oder jede bogenförmige Öffnung einen Bogenwinkel von bis zu 45 Grad aufweist oder wobei die oder jede bogenförmige Öffnung einen Bogenwinkel von zwischen 15 und 45 Grad aufweist oder, weiter bevorzugt, wobei die oder jede bogenförmige Öffnung einen Bogenwinkel von im Wesentlichen 30 Grad aufweist.

6. Verbinderanordnung nach einem der vorhergehenden Ansprüche, wobei die Bogenwinkel der einen oder der mehreren bogenförmigen Öffnungen und die Positionen der einen oder der mehreren Befestigungsöffnungen an dem zweiten Umfang dazu konfiguriert sind, die relative Drehung zwischen dem ersten und dem zweiten Verbinder im Gebrauch zu begrenzen.

7. Verbinderanordnung nach einem der vorhergehenden Ansprüche, wobei der erste Verbinder und/oder der zweite Verbinder dazu konfiguriert sind, Zugkräfte zu übertragen.

8. Verbinderanordnung nach einem der vorhergehenden Ansprüche, wobei die Verbinderanordnung dazu konfiguriert ist, Zugkräfte im Gebrauch entlang eines Kraftübertragungswegs durch den Zapfen von einem ersten Bauelement auf ein zweites Bauelement zu übertragen.

9. Verbinderanordnung nach Anspruch 8, wobei die oder jede Befestigungsöffnung von dem Kraftübertragungsweg versetzt ist.

10. Verbinderanordnung nach Anspruch 8 oder Anspruch 9, wobei eines der Bauelemente ein Spannelement ist, z. B. ein Windverbandgurt.

11. Verbinderanordnung nach einem der Ansprüche 8 bis 10, wobei der erste Verbinder einstückig mit dem ersten Bauelement gebildet ist und/oder der zweite Verbinder einstückig mit dem zweiten Bauelement gebildet ist.

12. Verbinderanordnung nach einem der vorhergehenden Ansprüche, umfassend eine Vielzahl von bogenförmigen Öffnungen und eine Vielzahl von Befestigungsöffnungen.

13. Verbinderanordnung nach Anspruch 12, wobei die Vielzahl von bogenförmigen Öffnungen ungleichmäßig um den ersten Umfang verteilt ist.

## Revendications

1. Ensemble connecteur de contreventement (1) configuré pour transmettre des charges de traction, comprenant :
un premier connecteur (2) ; et
un deuxième connecteur (3) ; dans lequel :
le premier connecteur comprend :
une première ouverture de pivot (21) définissant un centre d'une première circonférence (23) ; et
une ou plusieurs ouvertures arquées (22), chacune de l'une ou plusieurs ouvertures arquées étant disposée à une position sélectionnée sur la première circonférence ; et
le deuxième connecteur comprend :
une deuxième ouverture de pivot (31) définissant un centre d'une deuxième circonférence (33) ; et
une ou plusieurs ouvertures de fixation (32) disposées sur la deuxième circonférence,
dans lequel la deuxième ouverture de pivot et la une ou plusieurs ouvertures de fixation disposées sur la deuxième circonférence comprennent un motif répétitif d'ouvertures de pivot et de fixation prévues le long d'au moins une partie d'une longueur du deuxième connecteur, qui peut être une sangle, dans lequel :
la première circonférence et la deuxième circonférence sont chacune disposées à la même distance radiale (r) de leurs ouvertures de pivot respectives ; et dans lequel :
la une ou plusieurs ouvertures arquées et la une ou plusieurs ouvertures de fixation sont configurées de telle sorte que, lorsqu'un élément de pivot (5) est reçu dans les première et deuxième ouvertures de pivot lors de l'utilisation, le premier connecteur et le deuxième connecteur peuvent être disposés, lors de l'utilisation, dans une plage limitée de positions relatives l'un par rapport à l'autre, dans laquelle au moins l'une de la une ou plusieurs ouvertures de fixation est alignée avec l'une de l'une ou plusieurs ouvertures arquées, de telle sorte qu'une fixation peut être reçue simultanément dans l'ouverture arquée et dans l'ouverture de fixation alignées, et le premier connecteur et le deuxième connecteur peuvent tourner l'un par rapport à l'autre ; et
la une ou plusieurs ouvertures arquées et la une ou plusieurs ouvertures de fixation sont configurées de telle sorte que la rotation relative entre le premier connecteur et le deuxième connecteur est limitée à une plage angulaire restreinte autour du pivot.

2. Connecteur selon l'une quelconque des revendications précédentes, dans lequel la une ou plusieurs ouvertures arquées et la une ou plusieurs ouvertures de fixation sont configurées de telle sorte que, lors de l'utilisation, le premier connecteur peut pivoter jusqu'à 45 degrés par rapport au second connecteur.

3. Ensemble connecteur selon l'une quelconque des revendications précédentes, dans lequel la une ou plusieurs ouvertures arquées et la une ou plusieurs ouvertures de fixation sont agencées de telle sorte que le premier connecteur et le deuxième connecteur puissent être alignés dans un nombre limité de positions relatives lors de l'utilisation.

4. Ensemble connecteur selon l'une quelconque des revendications précédentes, dans lequel la une ou plusieurs ouvertures arquées et la une ou plusieurs ouvertures de fixation sont configurées de telle sorte que, lors de l'utilisation, le premier connecteur puisse pivoter de 15 à 45 degrés par rapport au second connecteur, ou de préférence de telle sorte que le premier connecteur puisse pivoter d'environ 30 degrés par rapport au second connecteur.

5. Ensemble connecteur selon l'une quelconque des revendications précédentes, dans lequel la ou chaque ouverture arquée présente un angle d'arc allant jusqu'à 45 degrés, ou dans lequel la ou chaque ouverture arquée présente un angle d'arc compris entre 15 et 45 degrés, ou de préférence dans lequel la ou chaque ouverture arquée présente un angle d'arc sensiblement égal à 30 degrés.

6. Ensemble connecteur selon l'une quelconque des revendications précédentes, dans lequel les angles d'arc de l'une ou plusieurs ouvertures arquées et les positions de l'une ou plusieurs ouvertures de fixation sur la deuxième circonférence sont configurés pour limiter la rotation relative entre les premier et deuxième connecteurs lors de l'utilisation.

7. Ensemble connecteur selon l'une quelconque des revendications précédentes, dans lequel le premier connecteur et/ou le deuxième connecteur sont configurés pour transmettre des charges de traction.

8. Ensemble connecteur selon l'une quelconque des revendications précédentes, dans lequel l'ensemble connecteur est configuré pour transmettre des charges de traction d'un premier élément structurel à un deuxième élément structurel le long d'un chemin de transmission de force passant par le pivot lors de l'utilisation.

9. Ensemble connecteur selon la revendication 8, dans lequel la ou chaque ouverture de fixation est décalée par rapport au chemin de transmission de force.

10. Ensemble connecteur selon la revendication 8 ou la revendication 9, dans lequel un des éléments structurels est un élément de tension, par exemple une sangle de contreventement.

11. Ensemble connecteur selon l'une quelconque des revendications 8 à 10, dans lequel le premier connecteur est formé d'un seul tenant avec le premier élément structurel et/ou le deuxième connecteur est formé d'un seul tenant avec le deuxième élément structurel.

12. Ensemble connecteur selon l'une quelconque des revendications précédentes, comprenant une pluralité d'ouvertures arquées et une pluralité d'ouvertures de fixation.

13. Ensemble connecteur selon la revendication 12, dans lequel la pluralité d'ouvertures arquées sont réparties de manière inégale autour de la première circonférence.
